# EUROPÄISCHE PATENTSCHRIFT

(11) **EP 3 122 527 B1**
(45) Veröffentlichungstag und Bekanntmachung des Hinweises auf die Patenterteilung: **19.06.2019**
(21) Anmeldenummer: 15707949.2
(22) Anmeldetag: 05.03.2015
(51) Int. Cl.: B29B 11/16

(54) **VERFAHREN ZUR HERSTELLUNG EINES FASERVORFORMLINGS FÜR EIN FASERVERBUNDBAUTEIL**
METHOD FOR PRODUCING A FIBER PREFORM FOR A FIBER COMPOSITE COMPONENT
PROCÉDÉ DE FABRICATION D'UNE PRÉFORME FIBREUSE DESTINÉE À UNE PIÈCE COMPOSITE EN FIBRES

(30) Priorität: 25.03.2014 DE 102014205479
(43) Veröffentlichungstag der Anmeldung: 01.02.2017
(73) Patentinhaber: Bayerische Motoren Werke Aktiengesellschaft, 80809 München (DE)
(72) Erfinder: HONICKEL, Eva, 84028 Landshut (DE); MAI, Horst, 84095 Furth (DE); MARQUART, Maximilian, 81541 München (DE); SCHADE, Mirko, 84032 Landshut (DE)
(86) Internationale Anmeldenummer: PCT/EP2015/054558
(87) Internationale Veröffentlichungsnummer: WO 2015/144411

(56) Entgegenhaltungen:
- EP-A1- 2 474 410
- DE-A1-102010 022 168
- DE-U1-202007 006 528

## Beschreibung

Die vorliegende Erfindung betrifft ein Verfahren zur Herstellung eines Faservorformlings für ein Faserverbundbauteil, bei dem eine Faseranordnung auf einem Trägerwerkstoff angeordnet wird und der Trägerwerkstoff bei einem Umformvorgang von einer Spanneinrichtung gehalten wird, nach dem Oberbegriff des Anspruchs 1.

Für die industrialisierte Fertigung von Faserverbundbauteilen ist es erforderlich, einen mehrschichtigen Lagenaufbau in einem Umformvorgang umzuformen. Zur Vorbereitung des Umformvorgangs muss ein zweidimensionaler Faservorformling geschaffen werden, der sich aus mehreren Einzellagen zusammensetzt. Zur Herstellung des Faservorformlings wurden bislang Lagen aus Faserwerkstoffen zu einem Stack oder Lagenaufbau zusammengesetzt und punktuell chemisch oder mechanisch fixiert, der dann durch Zuschneiden durch alle Einzellagen auf einmal zu dem umzuformenden Vorformling weiterverarbeitet wurde und schließlich das Faserverbundbauteil in einem Umformvorgang mit Wärmezufuhr hergestellt.

Damit sich der Vorformling beim Umformvorgang in der Kavität des Werkzeugs kontrolliert mit definierter Änderung der Faserorientierungen verformt, ohne dass es zur Bildung von ungewünschten Falten oder Verwerfungen kommt, muss der Vorformling mit einem Spannrahmen oder Niederhalter gehalten werden, der eine kontrollierte Relativbewegung und Nachfließen von Bereichen der Einzellagen zueinander ermöglicht, aber ein unkontrolliertes Verrutschen der Einzellagen zueinander verhindert. Zu diesem Zweck wurde bislang der Ausgangswerkstoff des Faserverbundbauteils großflächig zugeschnitten, damit genügend Material für di Festlegung des Materials im Spannrahmen zur Verfügung stand. Es liegt in der Natur der Dinge, dass es bei dieser Vorgehensweise zu einem hohen Materialverbrauch an Faserwerkstoff kommt, der lediglich deswegen zugegeben werden muss, damit ausreichend Material zum Einspannen im Spannrahmen zur Verfügung steht.

Anhand der DE 10 2010 023 044 A1 ist ein Verfahren zum Herstellen eines Faservorformlings für ein Faserverbundbauteil bekannt geworden, bei dem ein Faserbündel aus Carbonfasern mittels einer Legeeinrichtung entlang einer vorgegebenen Raumkurve auf einem Trägermaterial abgelegt wird und an diesem durch thermische Aktivierung eines thermoplastischen Bindermaterials fixiert wird.

Des weiteren ist anhand der DE 10 2004 060 647 B4 eine Vorrichtung zur Fixierung einer Faseranordnung auf einem Transportband mittels einer Vernähstation bekannt geworden. Die Faseranordnung kann an der Fasergrundstruktur mittels einer Legeeinrichtung angeordnet werden.

Um den Materialverbrauch an Ausgangswerkstoff für das Faserverbundbauteil zu verringern, ist es anhand der auf die Anmelderin zurückgehenden unveröffentlichten Patentanmeldung DE 10 2013 204 270.9 bereits bekannt geworden, die umzuformende Faseranordnung in einer Umhüllung anzuordnen, die aus einem flexiblen Material besteht und die Handhabung einer mehrlagigen Faseranordnung vereinfacht. Die Umhüllung ist dabei größer als die Faseranordnung dimensioniert und kann vom Spannrahmen gehalten werden. Es ist dabei auch möglich, die Umhüllung zumindest abschnittsweise kraftschlüssig und/oder stoffschlüssig mit der Faseranordnung zu verbinden, um eine Kraftübertragung zwischen der Umhüllung und der Faseranordnung zu ermöglichen.

Anhand der DE 10 2010 022168 A1 ist ein Verfahren zur Herstellung eines Faservorformlings für ein Faserverbundbauteil bekannt geworden, bei dem eine Faseranordnung auf einem Trägerwerkstoff angeordnet wird und der Trägerwerkstoff bei einem Umformvorgang von einer Spanneinrichtung gehalten wird, und dazu mindestens ein Zuschnitt aus einem Faserwerkstoff bereitgestellt wird, der Zuschnitt entsprechend der Richtung der Belastung des Zuschnitts mittels einer automatisierten Handhabungseinrichtung ausgerichtet wird und der Zuschnitt am Trägerwerkstoff fixiert wird und der Trägerwerkstoff mit fixiertem Zuschnitt für einen Nachfolgeprozess bereitgestellt wird.

Anhand der EP 2 474 410 A1 ist ein Verfahren zur wenigstens teilweise automatisierten Herstellung eines Preformpatchs bekannt geworden, welches dann zur Reparatur einer Flügels eines Windrades eingesetzt werden kann und zwar durch den Einsatz standardisierter Nähprogramme zur Herstellung der entsprechenden Patches.

Anhand der DE 20 2007 006 5288 ist eine Einrichtung zum Handhaben von Materialstücken bekannt geworden, welche eine Handhabungseinrichtung mit einem oder mehreren Handhabungsgeräten aufweist, die einen mehrachsigen Manipulators mit einem Handlingwerkzeug zum Aufnehmen und Abgeben von mindestens einem Materialstück aufweisen und das Handlingwerkzeug einen drehbaren Materialträger aufweist, der als Wickelträger oder als Materialstückträger zur Aufnahme von mehreren Materialstücken ausgebildet ist.

Ausgehend hiervon liegt der vorliegenden Erfindung die Aufgabe zu Grunde, ein Verfahren bereitzustellen, mit dem einerseits der Materialverbrauch an Faserausgangsmaterial verringert werden kann, die Kosten der Herstellung des Faserverbundbauteil verringert werden können und sich ein Faserverbundbauteil fertigen lässt, welches eine komplexe Außenkontur und einen komplexen integrierten Aufbau aufweist.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Die Erfindung schafft ein Verfahren zur Herstellung eines Faservorformlings für ein Faserverbundbauteil, bei dem eine Faseranordnung auf einem Trägerwerkstoff angeordnet wird und der Trägerwerkstoff bei einem Umformvorgang von einer Spanneinrichtung gehalten wird, mit folgenden Schritten:
- Bereitstellen mindestens eines Zuschnitts aus einem Faserwerkstoff
- Ausrichten des Zuschnitts entsprechend der Richtung der Belastung des Zuschnitts im Faserverbundbauteil mittels einer automatisierten Handhabungseinrichtung
- Fixieren des Zuschnitts am Trägerwerkstoff
- Bereitstellen des Trägerwerkstoffs mit fixiertem Zuschnitt für einen Nachfolgeprozess, und
die automatisierte Handhabungseinrichtung vor der Anordnung des Zuschnitts einen gerichteten Faserverlauf im Zuschnitt erfasst und den Zuschnitt dann lastpfadgerecht am Trägerwerkstoff oder mindestens einem am Trägerwerkstoff bereits angeordneten Zuschnitt positioniert.

Im Gegensatz zum bekannten Verfahren wird also bei dem erfindungsgemäßen Verfahren zunächst mindestens ein Zuschnitt aus einem Faserwerkstoff bereitgestellt und der mindestens eine Zuschnitt entsprechend der Richtung der Belastung des Zuschnitts im Faserverbundbauteil mittels einer automatisierten Handhabungseinrichtung am Trägerwerkstoff angeordnet. Bei dem Vorgang der Ausrichtung kann es sich um ein Positionieren und Drehen des mindestens einen Zuschnitts durch die automatisierte Handhabungseinrichtung handeln, die beispielsweise mittels einer Sensoreinrichtung einen gerichteten Faserverlauf im Zuschnitt erkennen kann und dann den Zuschnitt lastpfadgerecht am Trägerwerkstoff positionieren kann.

Für ein dreidimensionales Faserverbundbauteil können auf diese Weise unterschiedlich geformte Zuschnitte aus unterschiedlichen Ausgangsfasermaterialien mittels der automatisierten Handhabungseinrichtung am Trägerwerkstoff angeordnet w rden, also beispielsweise entlang der Längs- und Querrichtung des Faservorformlings in unterschiedlichen Schichtdicken und unterschiedlichen Lageorientierungen der einzelnen Zuschnitte zur Optimierung der Festigkeit und Steifigkeit des fertigen Faserverbundbauteils.

Entsprechend der im Faserverbundbauteil im späteren Einsatz vorherrschenden mehrdimensionalen Spannungsverteilung können Zuschnitte aus unterschiedlichen Fasergrundwerkstoffen und Fasergrundorientierungen mittels der automatisierten Handhabungseinrichtung an dem Trägermaterial und dem darauf mindestens einen bereits angeordneten Zuschnitt schichtweise aufgebracht werden, wobei der Flächenverbrauch an Faserausgangsmaterial deutlich verringert werden kann und an die benötigten Abmessungen des Zuschnitts im fertigen Faserverbundbauteil angepasst werden kann und so deutlich weniger Ausgangsmaterial an Fasergrundwerkstoffen benötigt wird, als dies beim bekannten Verfahren der Fall ist, bei dem ein Stack mit gleich großen aufeinander gestapelten Lagen an Ausgangsfaserwerkstoffen bereitgestellt wird, durch alle die hindurch dann auf einmal ein Zuschnittvorgang erfolgt.

Die so hergestellte Faseranordnung wird dann in einem nächsten Schritt des erfindungsgemäßen Verfahrens zumindest abschnittsweise am Trägerwerkstoff fixiert, wobei hier beispielsweise ein Nähvorgang zum Einsatz kommen kann, mit dem einzelne Bereiche der Faseranordnung am Trägerwerkstoff festgelegt werden oder auch Verstärkungsstrukturen in die Faseranordnung integriert werden können, die den nachfolgenden Umformvorgang im Nachfolgeprozess positiv beeinflussen.

Die so hergestellte Faseranordnung mit Trägerwerkstoff wird dann in einem nächsten Schritt für einen Nachfolgeprozess bereitgestellt, also beispielsweise einem thermischen Umformvorgang direkt zugeführt oder in einem Stapelbereich, der einer Umformstation vorgelagert ist, zwischengespeichert. Der Trägerwerkstoff, bei dem es sich um eine kostengünstige Glasfasermatte oder dergleichen handeln kann, erleichtert das Handling des Faservorformlings in Spannzang n, Spannrahmen, Niederhalter und dergleich n und kann für den nachfolgenden Umformvorgang im Faservorformling verbleiben und kann bei der Weiterverarbeitung des Faservorformlings zum Faserverbundbauteil die Nachfolgeprozesse unterstützen und im Bauteil Festigkeit und Steifigkeit und Korrosionsschutz verbessern.

Es ist nach einer Weiterbildung der Erfindung vorgesehen, dass das Bereitstellen des Zuschnitts den Schritt des Ausschneidens des Zuschnitts aus einem Faserwerkstoff und die unmittelbar darauf folgende Anordnung des Zuschnitts am Trägerwerkstoff und den Schritt der Zwischenlagerung des ausgeschnittenen Zuschnitts in einem Vorlagebereich vor der Anordnung des Zuschnitts am Trägerwerkstoff umfasst.

Nach dem erfindungsgemäßen Verfahren kann beispielsweise der Trägerwerkstoff in der Form einer Bahn auf einer Rolle bereitgestellt werden, von der dann von einem Schneidportal ein Zuschnitt des Trägerwerkstoffs heraus geformt wird, der dann einem dem Schneidportal nachgeordneten Transferportal zugeführt wird. Es ist auch möglich, dass bereits vorgefertigte Zuschnitte des Trägerwerkstoffs in einem Vorlagebereich des Transferportals bereitgehalten werden und dann von einer automatisierten Handhabungseinrichtung auf dem Transferportal abgelegt werden. In hierzu ähnlicher Weise kann mindestens ein Zuschnitt eines Faserwerkstoffs vom Schneidportal aus einer dem Schneidportal zugeordneten Halbzeugspeichereinrichtung gebildet werden, indem das Halbzeug von der Speichereinrichtung dem Schneidportal zugeführt wird, das Schneidportal entsprechend Formvorgaben, die beispielsweise mittels eines Nestingprogrammes oder einer Finite Elemente Berechnung bestimmt wurden, aus der von der Halbzeugspeichereinrichtung stammenden Werkstoffbahn einen Zuschnitt fertigt und ihn dann ohne Zwischenlagerschritt unmittelbar an dem Trägerwerkstoff anordnet. Auch können dem Einfach- oder Mehrfachschneigerät des Schneidportals mehrere Einrichtungen zur Speicherung von Faserwerkstoffhalbzeug vorgelagert sein, von den Halbzeug entnommen und dem Schneidportal zum Anfertigen von Zuschnitten zugeführt wird. Diese Zuschnitte können dann sofort von der automatisierten Handhabungseinrichtung in der Form eines Roboters oder dergleichen auf d m Trägerwerkstoffzuschnitt und/oder bereits daran angeordneten Zuschnitten appliziert werden oder vor der Anordnung durch die automatisierte Handhabungseinrichtung zwischengespeichert werden.

Die Winkelorientierung des Faserverlaufs des Zuschnitts oder der Zuschnitte aus Faserwerkstoff nach ihrer Fertigung durch das Schneidportal ist dabei nicht relevant, da die lastpfadgerechte Ausrichtung des Zuschnitts vor der Applikation am Trägerwerkstoff und/oder einem schon daran applizierten Zuschnitt entsprechend beispielsweise der Finite Elemente Berechnung, also ganz allgemein in vorbestimmter Weise durch die automatisierte Handhabungseinrichtung durchgeführt wird. Auf diese Weise können auch Zuschnitte von unterschiedlichen, dem Schneidportal vorgelagerten Halbzeugspeichereinrichtungen mit Fasermaterialien mit unterschiedlichen Werkstoffeigenschaften in der Form von beispielsweise Gestricken, Gesticken, Gelegen, Geweben oder Gewirke in das automatisierte Verfahren zur Herstellung eines Faservorformlings eingebunden werden.

Das erfindungsgemäße Verfahren sieht nach einer Weiterbildung auch vor, dass mindestens ein weiterer Zuschnitt an einem am Trägerwerkstoff angeordneten Zuschnitt unter Herbeiführung einer zumindest abschnittsweisen Überlappung des weiteren Zuschnitts am angeordneten Zuschnitt angeordnet wird und der weitere Zuschnitt vor der Anordnung entsprechend der Richtung der Belastung des Zuschnitts im Faserverbundbauteil mittels der automatisierten Handhabungseinrichtung ausgerichtet, also lastpfadgerecht positioniert und gedreht, angeordnet wird.

Auf diese Weise kann mindestens ein Zuschnitt mit unidirektionalem. Faserverlauf und/oder multidirektionalem Faserverlauf auf einem bereits am Trägerwerkstoff angebrachten Zuschnitt angeordnet werden, also auch ein mehrschichtiger Faservorformling mit unterschiedlich dimensionierten Zuschnitten in automatisierter Weise bereitgestellt werden, so dass im Gegensatz zu dem bekannten Verfahren in automatisierter Weise ein Faservorformling geschaffen wird, der nur an belastungsgerecht relevanten Bereichen mehrschichtig, d.h. also verstärkt ausgebildet ist, so dass auch die Gesamtmasse des sich ergebenden Faservorformlings und damit die Gesamtmasse des Faserverbundbauteils verringert werden kann und eine deutliche Materialersparnis an Faserhalbzeug und Gewinn an Leichtbaupotential im späteren Bauteil erzielt werden kann.

Die Erfindung sieht nach einer Weiterbildung auch vor, dass in den Faservorformling Einlagen in der Form von Patches, inserts oder TFP Strukturen oder dergleichen und/oder formgebende Strukturen in der Form von beispielsweise Harzfolien oder Thermoplastfolien oder dergleichen oder Zuschnitte davon integriert werden. Es können also neben den Fasergrundwerkstoffen auch Sondermaterialien in den Lagenaufbau integriert werden, die von der automatisierten Handhabungseinrichtung in vorbestimmter Weise positioniert und gedreht in den Lagenaufbau eingesetzt werden. Auf diese Weise können auch Zuschnitte mit Überlappungsbereichen aneinander angeordnet werden und beabsichtigte Hohlräume oder Bereiche mit abgeschrägten Überlappungsbereichen der Zuschnitte mit Schäftungen, bei denen die Lagen abschnittsweise überlappen und/oder lastpfadgerechte Winkelveränderungen der lastaufnehmenden Faserstrukturen herbeigeführt werden.

Es ist nach einer Weiterbildung der Erfindung auch vorgesehen, dass vorbestimmte Bereiche eines Aufbaus aus Trägerwerkstoff und mindestens einem Zuschnitt in beispielsweise einem der automatisierten Handhabungseinrichtung nachgeordneten und einem der Umformstation vorgelagerten Zwischenspeicherbereich für Vorformlinge vorgelagerten Fixierstation aneinander bereichsweise fixiert werden, indem die Bereiche beispielsweise mittels einer Faser vernäht werden, wodurch auch gezielte Verstärkungsstrukturen beim Nähvorgang in den Lagenaufbau integriert werden können, die den späteren thermischen Umformvorgang gezielt unterstützen und die Bildung von Falten oder Verwerfungen vermeiden. Durch die Vernähung kann auch das spätere Fertigbauteil lokal mechanisch verstärkt werden, seine Struktur im Umformprozess fixiert werden und die direkt abgelegten Strukturen für den Injektionsprozess gezielt fixiert werden und eine bessere Infiltration in Dickenrichtung und Ebenenrichtung erreicht werden.

Es ist nach einer Weiterbildung der Erfindung auch vorgesehen, dass in den Lagenaufbau eine zweidimensionale Verstärkungsstruktur mittels Direktablage eines Kohlenstofffaserrovings an einem Aufbau aus Trägerwerkstoff und/oder mindestens einem Zuschnitt angeordnet wird. Die Verstärkungsstruktur kann lastpfadgerecht in Richtung der Hauptlastrichtung des Faserverbundbauteils oder in einem von einer 0° Orientierung abweichenden Winkel des Faserverlaufs appliziert werden, der vorab als Winkel relativ zur Hauptlastachse bestimmt wurde.

Schließlich sieht der Erfindung auch vor, dass der Trägerwerkstoff, über den in den Faservorformling die Formgebung stabilisierende Zugkräfte eingeleitet werden, während des der Herstellung des Faservorformlings folgenden Nachfolgeprozesses, also beispielsweise des gesamten Handlings bis zur thermischen Umformung und während des thermischen Umformvorgangs am Vorformling verbleibt.

Das erfindungsgemäße Verfahren macht es möglich, dass unterschiedliche Flächengrammaturen in den Lagenaufbau des Vorformlings integriert werden können. Das textile Halbzeug muss zur Bildung des Vorformlings nicht in hinsichtlich seines Faserverlaufs zur Integration in den Vorformling richtiger Lageorientierung vorliegen, da die lastpfadgerechte Ausrichtung des Zuschnitts durch die automatisierte Handhabungseinrichtung nach funktionalen Vorgaben des Stacks vorgenommen wird. Auf diese Weise ist auch eine Durchmischung von Zuschnitten aus Faserwerkstoffhalbzeugen im Lagenaufbau möglich, da die automatisierte Handhabungseinrichtung die getrennten Einzellagenzuschnitte aufnimmt und auf den Trägerwerkstoff und/oder daran bereits befindlicher Einzellagenzuschnitte nach funktionalen Vorgaben lastpfadgerecht appliziert und dabei auch noch Sonderwerkstoffe in den Lagenaufbau integrieren kann. Dabei können definierte Überlappungsbereiche zwischen Einzellagenzuschnitten herbeigeführt werden, es ist auch die Bildung von Hohlräumen im Lagenaufbau möglich, genauso wie die Herbeiführung von vorbestimmten Lagenschäftungen und Winkeländerungen im Faserverlauf. Es können auch formgebende Strukturen in der Form von Harzfolien, Thermoplastfolien oder dergleichen in den Lagenaufbau integriert werden.

Ein so hergestellter Vorformling kann einem nachgeschalteten thermischen Umformungsprozess direkt zugeführt werden oder beispielsweise auch vor dem Umformvorgang zwischengespeichert werden, um beispielsweise für den thermischen Prozessablauf notwendige Verweilzeiten abzuwarten.

Die Erfindung wird im Folgenden anhand der Zeichnung näher erläutert. Diese zeigt in:
Fig. 1 eine schematische Darstellung einer Fertigungsvorrichtung mit einem Vorlagebereich mit mehreren verschiedenen Faserwerkstoffhalbzeugen zur Herstellung eines Faservorformlings;
Fig. 2 einen schematischen Aufbau einer Fertigungsstrecke zur Durchführung des erfindungsgemäßen Verfahrens;
Fig. 3 eine Darstellung ähnlich Fig. 2 zur Erläuterung der Integration einer Verstärkungsstruktur durch Faserdirektablage;
Fig. 4 eine Draufsichtansicht auf einen an einem Abschnitt eines Trägerwerkstoffs angeordneten Faservorformling in der Form eines Preforms aus dem oberen Bereich einer A-Säule und des Dachrahmens;
Fig. 5 eine Draufsichtansicht ähnlich Fig. 4, die die Aufbringung von UD-Fasern als Verstärkungsstruktur zeigt;
Fig. 6 eine Draufsichtansicht ähnlich Fig. 4, die die Aufbringung von Zuschnitten mit 45° Fasern als Verstärkungsstruktur zeigt; und
Fig. 7 eine Draufsichtansicht ähnlich Fig. 6, die die Aufbringung von Zuschnitten mit 0° Fasern als Verstärkungsstruktur zeigt.

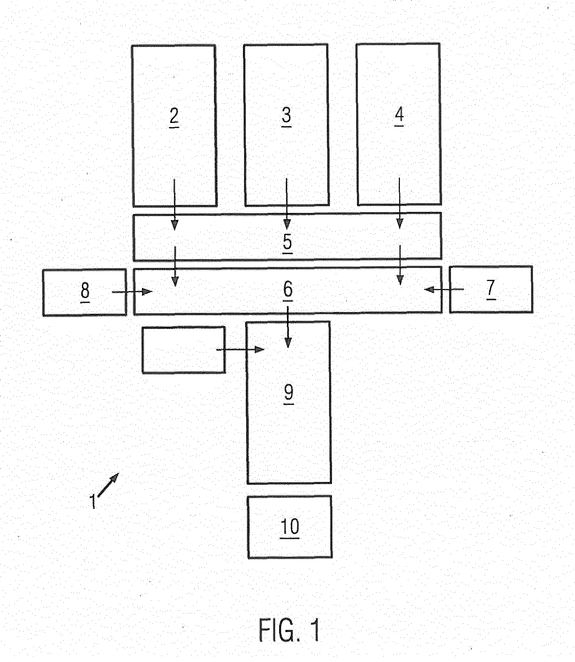

Fig. 1 der Zeichnung zeigt eine schematische Übersichtsskizze einer Fertigungsvorrichtung oder Umformanlage zur Herstellung eines Faservorformlings nach dem erfindungsgemäßen Verfahren.

In einem Vorlagebereich 1 befinden sich im dargestellten Beispiel drei unterschiedliche Faserwerkstoffhalbzeuge 2, 3, 4 mit beispielsweise unterschiedlichen Flächengrammaturen angeordnet. Obwohl bei dem gezeigten Beispiel lediglich drei Halbzeuge dargestellt sind, lässt sich die Zahl der Halbzeuge je nach Anwendungsbedarf erweitern.

Die Halbzeuge 2, 3 und 4 werden einem gemeinsamen Schneidportal 5 zugeführt, von dem vorab beispielsweise mittels eines Nestingprogrammes und einer Finite Elemente Berechnung bestimmte Zuschnittsformen erzeugt werden, die für den entsprechenden Anwendungsfall optimiert sind.

Der Winkel des textilen Halbzeugs ist dabei nicht relevant, da in dem nachgeschalteten Transferportal 6 jeder Faserwinkel lastpfadgerecht hergestellt werden kann, indem der jeweilige Zuschnitt von einer im Transferportal angeordneten automatisierten Handhabungseinrichtung entsprechend positioniert und gedreht wird.

Das Transferportal 6 ist auch dazu in der Lage, Sonderwerkstoffe in der Form von beispielsweise Patches oder Inserts aus Speichereinrichtungen 7, 8 zu entnehmen und dem Lagenaufbau zuzuführen. Auf diese Weise entsteht ein näher anhand der weiteren Figuren ersichtlicher Lagenaufbau einer Faseranordnung, der dann in einer dem Transferportal 6 nachgeschalteten Fixierstrecke 9 am Trägerwerkstoff 11 fixiert wird und nach einem Beschnitt einem nachgeschalteten Abstapelbereich 10 zugeführt wird.

Anstatt der Zuführung der Faservorformlinge zum Abstapelbereich 10, der einer nicht näher dargestellten thermischen Umformstation vorgelagert ist, ist es auch möglich, die so hergestellten Faservorformlinge der Umformstation zur thermischen Umformung sofort zuzuführen, es hängt dies beispielsweise von der Verarbeitungskapazität der Umformstation oder notwendiger Verweilzeiten des Faservorformlings vor der thermischen Umformung ab.

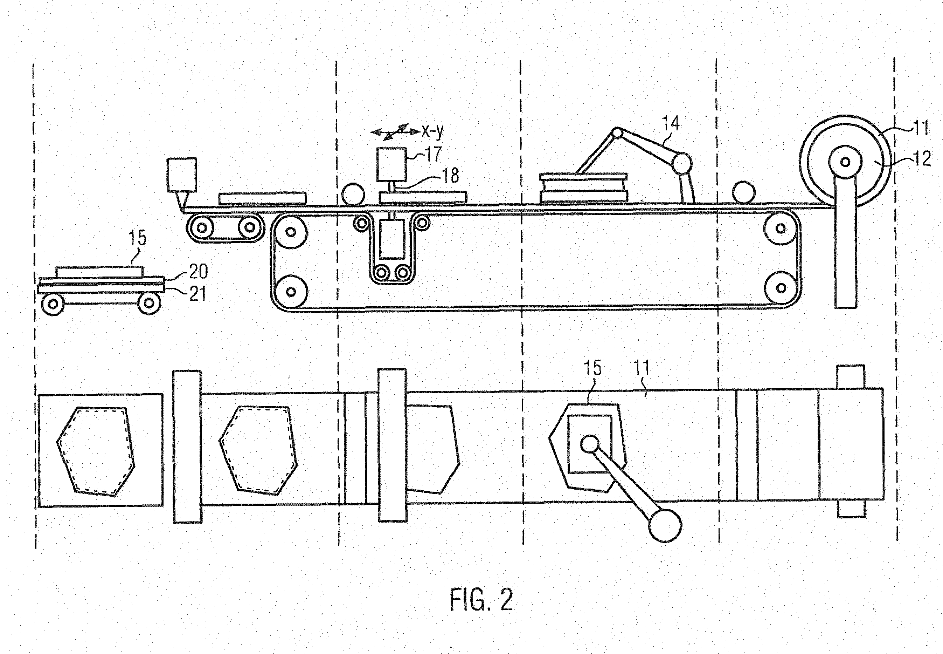

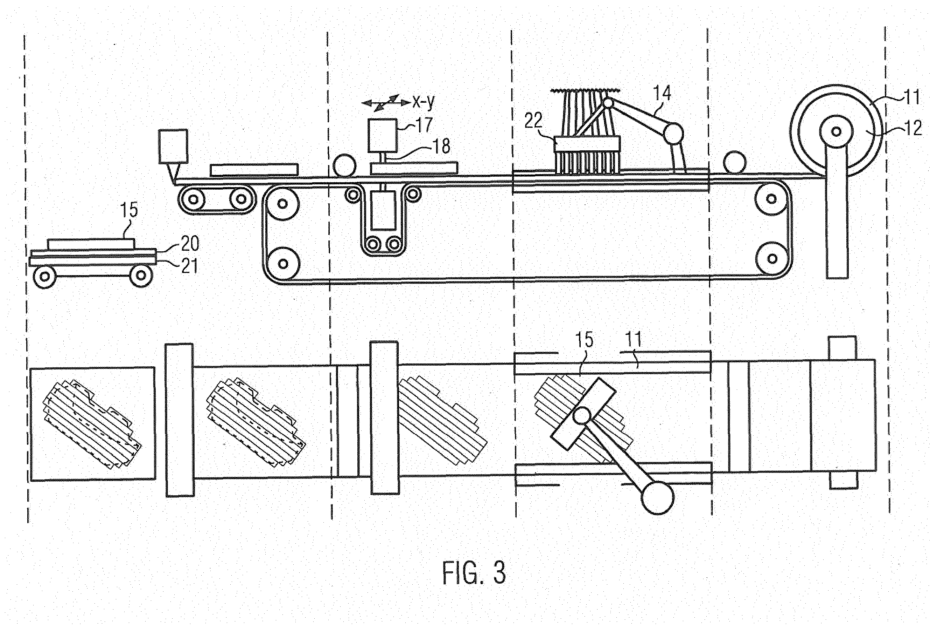

In Fig. 2 und Fig. 3 der Zeichnung sind in schematischer Darstellung Fertigungstrecken zur Durchführung des erfindungsgemäßen Verfahrens gezeigt.

In einem ersten Abschnitt wird ein Trägerwerkstoff 11 in der Form von auf einer Rolle 12 vorliegendem Glasfaserträgermaterial bereitgestellt, der mittels eines Transportbandes 13 in Richtung zu einer automatisierten Handhabungseinrichtung in der Form eines Roboters 14 befördert wird. Der Roboter 14 entnimmt bei der dargestellten Ausführungsform einem nicht näher dargestellten Vorlagebereich mit bereits gefertigten Zuschnitten aus Faserwerkstoffen einen Zuschnitt 15 und positioniert ihn auf dem Trägerwerkstoff 11 und zwar so, dass der Faserverlauf des Zuschnitts 15 zur Aufnahme von Kräften aus der Belastung des herzustellenden Faserverbundbauteils lastpfadgerecht vorliegt.

Es kann dies bei einer ersten Lage des Lagenaufbau ein Zuschnitt in 0° Winkelorientierung sein, es können auch bei der ersten Lage bereits mehrere Zuschnitte 15 mit unterschiedlichen Flächengrammaturen textiler Halbzeuge verarbeitet werden.

Obwohl in Fig. 2 der Zeichnung nur ein Zuschnitt 15 dargestellt ist, können von dem Roboter 14 mehrere Zuschnitte 15 mit unterschiedlichen Winkelanordnungen des Faserverlaufs der einzelnen Zuschnitte 15 zueinander auf dem Trägerwerkstoff 11 angeordnet werden, so dass sich bei mehreren zumindest abschnittsweise übereinander angeordneten Zuschnitten Bereiche des Faservorformlings ergeben, die lastpfadgerecht unterschiedliche Materialstärken aufweisen, so dass Faserwerkstoffmaterial nur an den belastungsrelevanten Stellen mit unterschiedlicher Materialstärke vorliegt, nicht aber beispielsweise in außerhalb der Hauptlastrichtung liegenden Bereichen des später fertigen Faserverbundbauteils, so dass unnötige Materialanhäufungen an Faserwerkstoff vermieden werden können und sich somit einerseits eine Materialersparnis ergibt und andererseits auch eine Gewichtsreduzierung des fertigen Faserverbundbauteils realisiert werden kann.

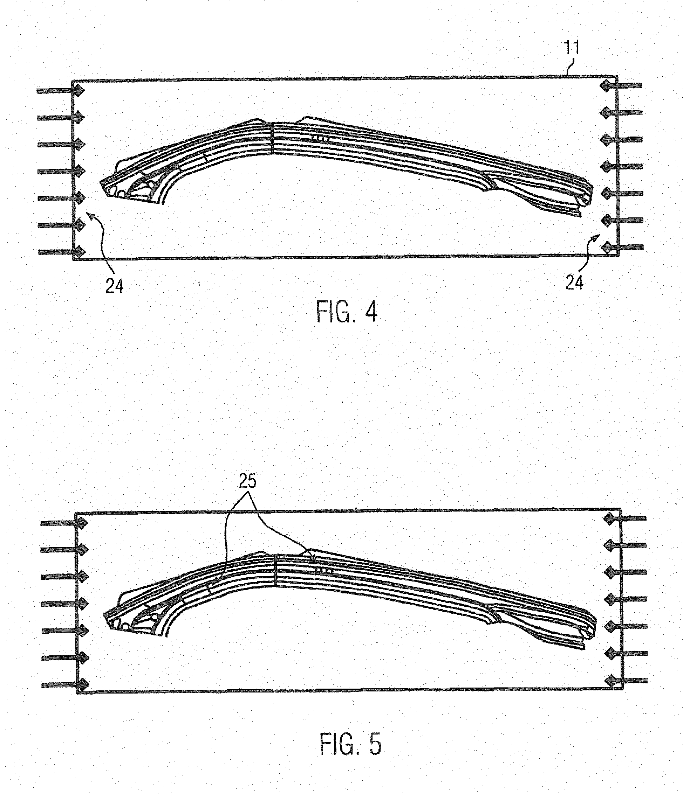

Nachdem ein näher anhand von Fig. 4 bis Fig. 7 ersichtlicher Lagenaufbau 16 mit mehreren Zuschnitten 15 durch den Roboter 14 erstellt worden ist, wird der Lagenaufbau 16 mit Trägerwerkstoff 11 einem nächsten Abschnitt der Fertigungstrecke mittels des Transportbands 13 zugeführt, in dem eine CNC Portalnähmaschine 17 zweidimensional Fixiernähte mittels eines Nähkopfs 18 erzeugt und den Lagenaufbau 16 beziehungsweise die Zuschnitte 15 an dem Trägerwerkstoff 11 fixiert.

Danach verlässt der Trägerwerkstoff 11 mit daran fixierten Zuschnitten 15 den Abschnitt der Fertigungstrecke mit der Portainähmaschine 17 und wird über das Transportband 13 einem traversierenden Trennsystem in der Form beispielsweise einer mittels Laser arbeitenden Schneideinrichtung zugeführt, die einen aus der Zeichnung ersichtlichen Abschnitt 20 aus dem bahnförmig vorliegenden Glasfaserträgermaterial 11 abschneidet und sich ein so ergebender Faservorformling mit Trägerwerkstoff 11 zur Abstapelung auf einer schematisch dargestellten Speichereinrichtung 20 hergestellt worden ist.

Fig. 3 der Zeichnung zeigt eine schematische Darstellung einer Fertigungsstrecke, die grundsätzlich der in Fig. 2 der Zeichnung dargestellten Fertigungstrecke entspricht und bei der eine Zusatzfunktionalität integriert wurde. Diese zusätzliche Funktionalität zeigt sich in dem Bereich, in dem der Roboter 14 zur automatisierten Positionierung und Drehung der Zuschnitte 15 angeordnet ist.

Der Roboter 14 führt neben dem automatisierten lastpfadgerechten Positionieren und Drehen der Zuschnitte 15 auf dem Trägerwerkstoff 11 die zusätzliche Funktion der Bildung einer Verstärkungsstruktur mittels Faserdirektablage auf den Zuschnitten 15 aus. Zu diesem Zweck wird einem Mehrfachlegekopf 22 des Roboters 14 mittels einer Rovingzuführung 23 Fasermaterial in Form von Faserkabeln zugeführt, welches vom Mehrfachlegekopf 22 auf dem Lagenaufbau zur Bildung einer Verstärkungsstruktur aufgebracht wird.

Die weiteren Arbeitsschritte der in Fig. 3 dargestellten Fertigungstrecke entsprechen dann wieder derjenigen nach Fig. 2.

Fig. 4 der Zeichnung zeigt eine Draufsichtansicht auf einen an einem Abschnitt eines Trägerwerkstoffs 11 angeordneten Faservorformling in der Form eines Preforms aus dem oberen Bereich einer A-Säule und des Dachrahmens eines nicht näher dargestellten Fahrzeugs.

Die Zeichnung dient auch gleichzeitig der Erläuterung, dass es nach dem erfindungsgemäßen Verfahren auch möglich ist, vorab einen Abschnitt eines Trägermaterials 11 aus beispielsweise Glasfasermaterial bereitzustellen, auf dem dann mittels der automatisierten Handhabungseinrichtung 14 Zuschnitte 15 aus Faserwerkstoffen angebracht werden können und zwar so, dass die Zuschnitte 15 im jeweiligen Abschnitt des Preforms lastpfadgerecht positioniert und gedreht angeordnet werden. Die Zeichnung zeigt auch, dass der Trägerwerkstoff 11 seitlich von Spannmitteln in der Form von Spannzangen 24 gehalten und unter Spannung gehalten werden kann. Statt der Spannzangen 24 ist es auch möglich, den Trägerwerkstoff 11 mittels eines nicht näher dargestellten Spannrahmens zumindest an den kurzen Stirnseiten des Trägerwerkstoffs 11 zu fixieren.

Ein der gewünschten Form des Faserverbundbauteils entsprechender Integrationspreform kann in der vorstehend geschilderten Weise mittels der Aufbringung mehrerer Zuschnitte 15 aus Faserwerkstoffen am Trägerwerkstoff 11 bereitgestellt werden.

Darüber hinaus kann auch eine Verstärkungsstruktur an dem Integrationspreform mittels der Aufbringung von in Kraftflussrichtung verlaufender UD-Fasern aufgebracht werden, die mittels eines entsprechenden Legekopfes vom Roboter 14 in der Form einer Litze 25 an mindestens einem bereits verlegten Zuschnitt 15 appliziert werden.

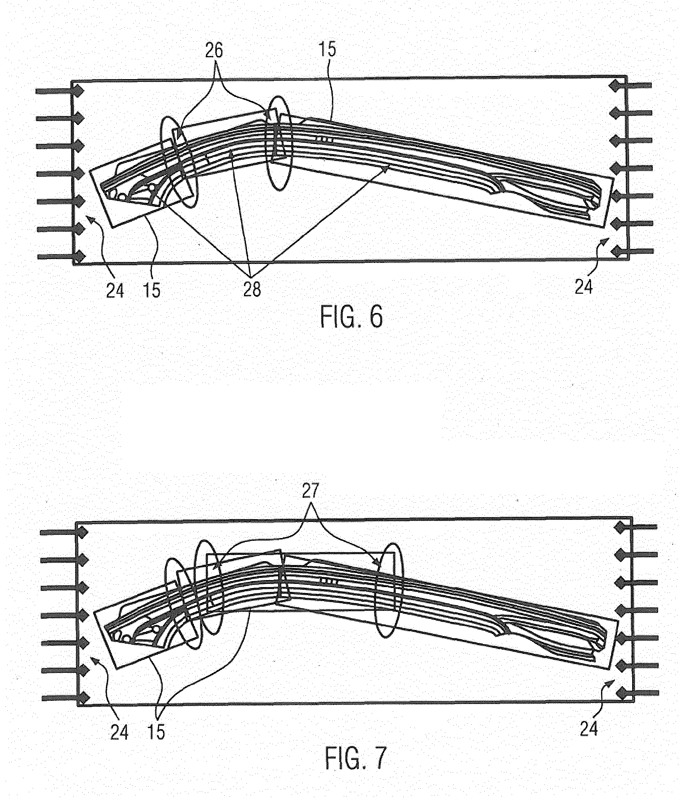

Fig. 6 der Zeichnung zeigt darüber hinaus auch die Möglichkeit der Erhöhung der Torsionssteifigkeit des Integrationspreforms mittels des erfindungsgemäßen Verfahrens, indem Patches 28 aus 45° Faserwerkstoffmaterial, die im Überlappungsbereich 26 zwischen verschiedenen Zuschnitten 15 mit geraden oder abgeschrägten Schnittkanten vorliegen können, mittels der automatisierten Handhabungseinrichtung 14 aufgebracht werden.

Schließlich zeigt Fig. 7 der Zeichnung auch die Ausbildung von Verstärkungsstrukturen am Integrationspreform mittels des erfindungsgemäßen Verfahrens an lokalen Überlappungsbereichen 27, die durch die Aufbringung von Zuschnitten 15 mit 0° Fasermaterial an bereits zur Bildung der Faseranordnung aufgelegten Zuschnitten appliziert werden.

Der solchermaßen hergestellte Faservorformling kann dann direkt einer Umformstation zur thermischen Behandlung übergeben werden oder aber in einem Zwischenlagerbereich angeordnet werden, wie dies vorstehend bereits erläutert worden ist.

Das erfindungsgemäße Verfahren macht es möglich, Verstärkungsstrukturen aus Kohlenstofffasern endkonturnah bezogen auf die Bauteilgeometrie des Faserverbundbauteils automatisiert auf das Trägermaterial aufzubringen. Der Verschnitt an teurem Kohlenstofffasermaterial wird verringert.

Der Trägerwerkstoff nimmt an den der Herstellung des Faservorformlings folgenden Prozessschritten teil und erleichtert das Handling und die Lagerung des Faservorformlings.

Über den Trägerwerkstoff können die für den Umformvorgang benötigten Rückhaltekräfte auf die Vernähung und die Verstärkungsstruktur weitergeleitet werden. Dies ermöglicht es, im Umformvorgang die Bildung von Falten und Verwerfungen zu vermeiden und erhöht die Qualität des Preforms.

Neben dem Einbringen von Verstärkungsstrukturen in den Faservorformling durch das Aufbringen von Zuschnitten und/oder Patches, ist es auch möglich, einen Kohlenstofffaserroving zu einem Faserband aufzuspreizen und direkt auf der zu verstärkenden Struktur aufzulegen. Dadurch wird im Vergleich zur Bildung eines Stacks, bei dem Verstärkungsstrukturen vollflächig ausgebildet werden, eine wesentliche Materialersparnis erzielt und der Verschnitt wird verringert.

Die Verstärkungsstrukturen können lastpfadgerecht in die Faseranordnung integriert werden, es entsteht wieder eine Materialersparnis, das fertige Faserverbundbauteil kann bei gleichzeitiger Gewichtsreduzierung höhere Lasten aufnehmen.

Im Zuge der Fixierung der Zuschnitte aneinander und am Trägerwerkstoff können auch Verstärkungsstrukturen in die Faseranordnung integriert werden, die die Bildung von Falten während des Umformvorgangs vermeiden, wodurch ein besseres Umformergebnis erzielt werden kann.

Die Fixierung in Form einer Vernähung erhöht auch die Belastungsfähigkeit des Laminats in Dickenrichtung, wodurch insbesondere an Klebestellen lokal höhere Lasten aufgenommen werden können.

Das erfindungsgemäße Verfahren sorgt auch dafür, dass der Lagenaufbau bezüglich der Zahl an Einzellagen nicht begrenzt ist, da kein Beschnitt durch alle vollflächigen Einzellagen auf einmal stattfindet, wie dies bei der Bildung eines Stacks nach dem bekannten Verfahren der Fall ist.

Das erfindungsgemäße Verfahren ermöglicht auch die Zufuhr von Sonderwerkstoffen in der Form von Inserts oder dergleichen, die Winkelorientierung des Zuschnitts ist nicht abhängig von der Winkelorientierung des Ausgangsmaterials, also des Halbzeugs, da die einzelnen Zuschnitte jeweils separat erstellt werden.

Hinsichtlich vorstehend im Einzelnen nicht näher erläuterter Merkmale der Erfindung wird im Übrigen ausdrücklich auf die Ansprüche und die Zeichnung verwiesen.

### Bezugszeichenliste

- 1.: Vorlagenbereich
- 2.: Faserwerkstoffhalbzeug
- 3.: Faserwerkstoffhalbzeug
- 4.: Faserwerkstoffhalbzeug
- 5.: Schneidportal
- 6.: Transferportal
- 7.: Speicher
- 8.: Speicher
- 9.: Fixierstrecke
- 10.: Abstapelbereich
- 11.: Trägerwerkstoff
- 12.: Rolle
- 13.: Transportband
- 14.: Roboter
- 15.: Zuschnitt
- 16.: Lagenaufbau
- 17.: Portalnähmaschine
- 18.: Nähkopf
- 19.: Schneideinrichtung
- 20.: Abschnitt
- 21.: Speichereinrichtung
- 22.: Legekopf
- 23.: Rovingzuführung
- 24.: Spanneinrichtung
- 25.: Litze
- 26.: Überlappungsbereich
- 27.: Überlappungsbereich
- 28.: Patches

## Patentansprüche

1. Verfahren zur Herstellung eines Faservorformlings für ein Faserverbundbauteil, bei dem eine Faseranordnung auf einem Trägerwerkstoff (11) angeordnet wird und der Trägerwerkstoff (11) bei einem Umformvorgang von einer Spanneinrichtung (24) gehalten wird, mit folgenden Schritten:
- Bereitstellen mindestens eines Zuschnitts (15) aus einem Faserwerkstoff
- Ausrichten des Zuschnitts (15) entsprechend der Richtung der Belastung des Zuschnitts (15) im Faserverbundbauteil mittels einer automatisierten Handhabungseinrichtung (14)
- Fixieren des Zuschnitts (15) am Trägerwerkstoff (11)
- Bereitstellen des Trägerwerkstoffs (11) mit fixiertem Zuschnitt (15) für einen Nachfolgeprozess, **dadurch gekennzeichnet, dass**
die automatisierte Handhabungseinrichtung (14) vor der Anordnung des Zuschnitts (15) einen gerichteten Faserverlauf im Zuschnitt (15) erfasst und den Zuschnitt (15) dann lastpfadgerecht am Trägerwerkstoff (11) oder mindestens einem am Trägerwerkstoff (11) bereits angeordneten Zuschnitt (15) positioniert.

2. Verfahren nach Anspruch 1, **dadurch gekennzeichnet, dass** das Bereitstellen des Zuschnitts (15) den Schritt des Ausschneidens des Zuschnitts (15) aus einem Faserwerkstoff und die unmittelbar darauf folgende Anordnung des Zuschnitts (15) am Trägerwerkstoff (11) und den Schritt der Zwischenlagerung des ausgeschnittenen Zuschnitts (15) in einem Vorlagebereich (1) vor der Anordnung des Zuschnitts (15) am Trägerwerkstoff (11) umfasst.

3. Verfahren nach Anspruch 1 oder 2, **dadurch gekennzeichnet, dass** mindestens ein weiterer Zuschnitt (15) an einem am Trägerwerkstoff (11) angeordneten Zuschnitt (11) unter Herbeiführung einer zumindest abschnittsweisen Überlappung des weiteren Zuschnitts (15) am angeordneten Zuschnitt (15) angeordnet wird und der weitere Zuschnitt (15) vor der Anordnung entsprechend der Richtung der Belastung des Zuschnitts (15) im Faserverbundbauteil ausgerichtet wird.

4. Verfahren nach einem der vorstehenden Ansprüche, **dadurch gekennzeichnet, dass** mindestens ein Zuschnitt (15) mit unidirektionalem Faserverlauf und/oder multidirektionalem Faserverlauf auf einem bereits am Trägerwerkstoff (11) angebrachten Zuschnitt angeordnet wird.

5. Verfahren nach einem der vorstehenden Ansprüche, **gekennzeichnet durch** die Integration von Einlagen und/oder formgebender Strukturen in den Faservorformling.

6. Verfahren nach einem der vorstehenden Ansprüche, **dadurch gekennzeichnet, dass** vorbestimmte Bereiche eines Aufbaus aus Trägerwerkstoff (11) und mindestens einem Zuschnitt (15) vernäht werden.

7. Verfahren nach einem der vorstehenden Ansprüche, **dadurch gekennzeichnet, dass** eine zweidimensionale Verstärkungsstruktur mittels Direktablage eines Kohlenstofffaserrovings an einem Aufbau aus Trägerwerkstoff (11) und mindestens einem Zuschnitt (15) angeordnet wird.

8. Verfahren nach Anspruch 7, **dadurch gekennzeichnet, dass** die Verstärkungsstruktur in Richtung der Hauptbelastungsrichtung des Faserverbundsbauteils an dem Aufbau angeordnet wird.

9. Verfahren nach einem der vorstehenden Ansprüche, **dadurch gekennzeichnet, dass** der Trägerwerkstoff (11) in einem der Herstellung des Faservorformlings nachfolgenden Formgebungsvorgang an dem Faservorformling verbleibt.

## Claims

1. A method for producing a fibre preform for a fibre composite component, in which a fibre arrangement is arranged on a supporting material (11) and the supporting material (11) during a forming operation is held by a clamping means (24), having the following steps:
- providing at least one blank (15) made of a fibre material
- orienting the blank (15) corresponding to the direction of loading of the blank (15) in the fibre composite component by means of an automated handling means (14)
- fixing the blank (15) on the supporting material (11)
- providing the supporting material (11)with fixed blank (15) for a subsequent process, **characterised in that**
the automated handling means (14) prior to the arranging of the blank (15) detects a directional fibre orientation in the blank (15) and then positions the blank (15) according to the load path on the supporting material (11) or at least one blank (15) already arranged on the supporting material (11).

2. A method according to Claim 1, **characterised in that** the providing of the blank (15) comprises the step of cutting out the blank (15) from a fibre material and the arranging immediately following on therefrom of the blank (15) on the supporting material (11) and the step of temporarily storing the cut-out blank (15) in a template area (1) prior to the arranging of the blank (15) on the supporting material (11).

3. A method according to Claim 1 or Claim 2, **characterised in that** at least one further blank (15) is arranged on a blank (11) arranged on the supporting material (11), effecting overlapping at least in portions of the further blank (15) on the arranged blank (15), and the further blank (15) prior to the arranging is oriented corresponding to the direction of loading of the blank (15) in the fibre composite component.

4. A method according to one of the preceding claims, **characterised in that** at least one blank (15) with a unidirectional fibre orientation and/or multidirectional fibre orientation is arranged on a blank already attached to the supporting material (11).

5. A method according to one of the preceding claims, **characterised by** the integration of inserts and/or shaping structures into the fibre preform.

6. A method according to one of the preceding claims, **characterised in that** predetermined regions of a structure made of supporting material (11) and at least one blank (15) are stitched.

7. A method according to one of the preceding claims, **characterised in that** a two-dimensional reinforcing structure is arranged by means of direct deposition of a carbon fibre roving on a structure made of supporting material (11) and at least one blank (15).

8. A method according to Claim 7, **characterised in that** the reinforcing structure is arranged on the structure in the direction of the main loading direction of the fibre composite component.

9. A method according to one of the preceding claims, **characterised in that** the supporting material (11) in a shaping operation following the production of the fibre preform remains on the fibre preform.

## Revendications

1. Procédé d'obtention d'une préforme fibreuse, d'une pièce composite renforcée par des fibres,
selon lequel un agencement de fibres est mis en place sur un matériau de support (11) et le matériau de support (11) est maintenu par un dispositif de serrage (24) lors d'un processus de mise en forme,
ce procédé comprenant les étapes suivantes consistant à :
- se procurer au moins ébauche (15) en un matériau fibreux,
- orienter l'ébauche (15) selon la direction de sa charge dans la pièce composite renforcée par des fibres au moyen d'un dispositif de manipulation automatisé (14),
- fixer l'ébauche (15) sur le matériau de support (11),
- se procurer le matériau de support (11) avec l'ébauche (15) fixée à celui-ci pour permettre la suite du procédé,
**caractérisé en ce que**
le dispositif de manipulation automatisé (14) détecte, avant la mise en place de l'ébauche (15) le tracé orienté des fibres dans cette ébauche (15) et positionne ensuite l'ébauche (15) conformément au chemin de la charge sur le matériau de support (11) ou sur au moins une ébauche (15) déjà mise en place sur le matériau de support.

2. Procédé conforme à la revendication 1,
**caractérisé en ce que**
l'étape consistant à se procurer l'ébauche (15) comporte une étape de découpe de l'ébauche (15) à partir d'un matériau fibreux et la mise en place directement après l'ébauche (15) sur le matériau de support (11) et une étape de dépôt intermédiaire de l'ébauche (15) découpée dans une zone de dépôt préalable (1) avant la mise en place de l'ébauche (15) sur le matériau de support (11).

3. Procédé conforme à la revendication 1 ou 2,
**caractérisé en ce qu'**
au moins une autre ébauche (15) est mise en place sur une ébauche (15) mise en place sur le matériau de support (11) en effectuant un chevauchement au moins par zones de l'autre ébauche (15) sur l'ébauche mise en place, et l'autre ébauche (15) est orientée avant la mise en place conformément à la direction de la charge de l'ébauche (15) dans la pièce composite renforcée par des fibres.

4. Procédé conforme à l'une des revendications précédentes,
**caractérisé en ce qu'**
au moins une ébauche (15) ayant un tracé des fibres unidirectionnel et/ou un tracé des fibres multidirectionnel est mise en place sur une ébauche déjà mise en place sur le matériau de support (11).

5. Procédé conforme à l'une des revendications précédentes,
**caractérisé par**
l'intégration d'inserts et/ou de structures de mise en forme dans la préforme fibreuse.

6. Procédé conforme à l'une des revendications précédentes,
**caractérisé en ce que**
des zones prédéfinies d'une structure en matériau de support (11) et au moins une ébauche (15) sont cousues.

7. Procédé conforme à l'une des revendications précédentes,
**caractérisé en ce qu'**
une structure de renfort bidimensionnelle est mise en place par dépôt direct d'une mèche de fibres de carbone sur une ossature constituée du matériau de support (11) et d'au moins une ébauche (15).

8. Procédé conforme à la revendication 7,
**caractérisé en ce que**
la structure de renfort est mise en place sur l'ossature dans la direction de l'orientation principale de la charge de la pièce composite à base de fibres.

9. Procédé conforme à l'une des revendications précédentes,
**caractérisé en ce que**
le matériau de support (11) reste sur la préforme fibreuse lors d'un processus de mise en forme suivant la fabrication de cette préforme fibreuse.
